# EUROPÄISCHE PATENTANMELDUNG

(11) **EP 1 480 116 A2**
(43) Veröffentlichungstag der Anmeldung: **24.11.2004**
(21) Anmeldenummer: 04007888.3
(22) Anmeldetag: 01.04.2004
(51) Int. Cl.: G06F 3/033

(54) **Mousepad**

(30) Priorität: 23.05.2003 DE 10323790
(71) Anmelder: Carl Freudenberg KG, 69469 Weinheim (DE)
(72) Erfinder: Groten, Robert, 68280 Sundhoffen (FR); Jahn, Ulrich, 68910 Labaroche (FR); Riboulet, Georges, 68000 Colmar (FR)

(57) **Zusammenfassung**

Die Erfindung betrifft eine Unterlegmatte für das als Maus bezeichnete Eingabegerät eines Computers (Mousepad) bestehend aus mindestens einer gewebten oder gewirkten Schicht oder einer Vliesstoffschicht aus zu Mikorfasern oder Mikrofilamenten gesplitteten Bi- oder Multikomponenten Fasern oder Filamenten, wobei die Splittung durch Hochdruck-Fluidstrahlbehandlung der Oberfläche erfolgt ist.

## Beschreibung

### Technisches Gebiet

Die Erfindung betrifft eine Unterlegmatte für das als Maus bezeichnete Eingabegerät eines Computers (Mousepad).

Aus dem Dokument DE 297 22 764 U1 ist eine Unterlage, insbesondere Roll-Unterlage für eine Computermaus bekannt, die Teil eines in einem Tintenstrahldrucker bedruckbaren Druckbogens ist und auf der Unterseite mit einem rutschsicheren Auftrag versehen ist. Der Boden soll dabei aus einem mit Latex oder Acrylharz preparierten Zellulose-Vliesstoff bestehen und die Druckfarbe wird durch kurzzeitige Erwärmung fixiert. Weiterhin sind aus dem Dokument JP 09 241 959 Vliesstoffe bekannt, die aus sehr feinen Fasern bestehen und mit einem Harz imprägniert sind. Die Faser an den Enden der Oberfläche weisen eine hammerkopfförmige Gestalt auf. Ein solches Mousepad soll gute Staubabsorbtionsfähigkeiten besitzen. Das Dokument JP 10 312 240 beschreibt ein Mousepad dessen Oberfläche aus gewebten Textilien besteht mit einer Faserfeinheit von 0,05 bis 1 Denier und einer Rückseite aus einem elastischen Vliesstoff aus Fasern mit einem Durchmesser von 0,1 bis 20 µm, einer Dichte von 0,1 bis 0,4 g/cm² und einer Dicke von 0,1 bis 0,5 mm. Ein solches Mousepad gewährleistet eine gute Funktionsfähigkeit der Computermaus und besitzt eine gute Schmutzentfernbarkeit.

Die bekannten Mousepads weisen den Nachteil auf, dass insbesondere durch Schweiß und Handfett es zu festansetzenden Verunreinigungen auf der Unterlage bzw. in der Maus kommt. Daraus ergibt sich ein sehr hoher Verschleiß des Mousepads hinsichtlich aufgedruckter Muster bzw. ein großer Wartungsaufwand für die Computermaus.

Die Erfindung hat sich die Aufgabe gestellt, eine Unterlegmatte für das als Maus bezeichnete Eingabegerät eines Computers anzugeben, die die vorstehend gemahnten Nachteile vermindert.

Erfindungsgemäß wird die Aufgabe durch eine Unterlegmatte (Mousepad) gelöst, die aus mindestens einer gewebten oder gewirkten Schicht oder einer Vliesstoffschicht aus zu Mikrofasern oder Mikrofilamenten gesplitteter Bi- oder Multikomponenten-Fasern oder Filamenten besteht. Die erfindungsgemäße Unterlegmatte nimmt Schweiß und Hautfett gut auf und hat einen guten Grip für die Steuerungskugel der Maus.

Vorteilhafterweise liegt der Titer der Mikrofasern oder Mikrofilamente im Bereich von 0,05 bis 0,5 Dtex.

Besonders bevorzugt ist eine Unterlegmatte an deren Unterseiten eine Schaumstoffschicht vorhanden ist. Ein solches Mousepad weist eine angenehme Bedienbarkeit und Rutschsicherheit auf.

Vorteilhafterweise ist die Oberseite des erfindungsgemäßen Mousepads bedruckt. Überraschenderweise ist eine Bedruckung mit einem handelsüblichen Tintenstrahldrucker auf das durch die Wasserstrahlverfestigung und Splittung erhaltene Material auch ohne zusätzliche Imprägnierung mit einem Harz hinreichend farbstabil, auch wenn das Mousepad anschließend mit Hilfe eines Heißschmelzklebers auf der Schaumstoffschicht durch Aufbügeln fixiert wird.

Vorteilhafterweise wird die Mikrofaser- oder Mikrofilament-Flächenware auf der Unterseite mit einer Schaumstoffschicht versehen. Vorzugsweise erfolgt dabei die Anbringung der Schaumstoffschicht mit Hilfe eines Schmelzklebers. Die Oberseite des gesplitteten Materials wird vor der Verbindung mit der Schaumstoffschicht bedruckt. Vorzugsweise wird das Bedrucken auf die durch die Hochdruck-Fluidstrahlbehandlung verfestigte Oberfläche vorgenommen.

Das erfindungsgemäße Verfahren erfolgt in der Weise, daß eine gewebte oder gewirkte Schicht oder eine Vliesstoff-Schicht aus Bi- oder Multikomponenten-Fasern oder Filamenten durch Hochdruck-Fluidstrahlbehandlung der Oberfläche zu Mikrofasern oder Mikrofilamenten gesplittet wird.

Weitere vorteilhafte Ausgestaltungen des erfindungsgemäßen Verfahrens sind in den Ansprüchen 6 bis 12 dargelegt.

Anhand von zwei Beispielen wird die Erfindung nachfolgend näher erläutert.

### Beispiel 1:

Aus spaltbaren Bikomponenten Stapelfasern wird ein Flor mit einem Flächengewicht von 170 g/m² gelegt und wodurch Wasserstrahlbehandlung bei Drücken von <350 bar die Bikomponenten Fasern in Mikrofasem mit einem Titer von <0,2 dtex gesplittet und gleichzeitig verfestigt. Das verfestigte Mikrofasertextil wird in einem herkömmlichen Tintenstrahldrucker bedruckt auf der Rückseite mit einem Heißschmelzkleber versehen und auf eine Schaumstoffschicht aufgebügelt. Die Bedruckung bleibt ohne Reinigung etwa ein Jahr gut erhalten.

### Beispiel 2:

Ein splittbares Bikomponentenfilament wird nach Verstreckung und Ablage auf einem porösen Band durch einen Nadelstuhl vorverfestigt und anschließend durch beidseitige Wasserstrahlbehandlung bei Drücken von <220 bar zu einem Mikrofilamenttextil mit einer Papier ähnlichen Steifigkeit gesplittet und verfestigt. Dieses Material kann unmittelbar mit einem herkömmlichen Tintenstrahldrucker bedruckt und unter Nutzung eines Heißschmelzklebers durch Bügeln auf einer Schaumstoffunterlage fixiert werden. Das erfindungsgemäße Mousepad zeigt keine Feuchtigkeit durch Schweiß auf der Oberfläche und ist damit sehr kompfortabel für die Hand des Nutzers. Das erfindungsgemäße Mousepad besitzt einen guten Grip und damit eine gute Führbarkeit der Steuerungskugel. Einfarbig gefärbte Oberflächen zeigen innerhalb von zwei Jahren wenig Anschmutzungen und machen das Reinigen des Mousepads und der Computermaus für diesen Zeitraum überflüssig.

## Patentansprüche

1. Unterlegmatte für das als Maus bezeichnete Eingabegerät eines Computers (Mousepad) bestehend aus mindestens einer gewebten oder gewirkten Schicht oder einer Vliesstoff-Schicht aus zu Mikrofasern oder Mikrofilamenten gesplitteten Bi- oder Multikomponenten-Fasern oder Filamenten, wobei die Splittung durch Hochdruck-Fluidstrahlbehandlung der Oberfläche erfolgt ist.

2. Unterlegmatte nach Anspruch 1, **dadurch gekennzeichnet, daß** der Titer der Mikrofasern oder Mikrofilamente im Bereich von 0,05 bis 0,5 dtex liegt.

3. Unterlegmatte nach einem der Ansprüche 1 oder 2, **dadurch gekennzeichnet, daß** an der Unterseite eine Schaumstoff-Schicht vorhanden ist.

4. Unterlegmatte nach einem der Ansprüche 1 bis 3, **dadurch gekennzeichnet, daß** die Oberseite bedruckt ist.

5. Verfahren zur Herstellung einer Unterlegmatte nach einem der Ansprüche 1 bis 4, **dadurch gekennzeichnet, daß** eine gewebte oder gewirkte Schicht oder eine Vliesstoff-Schicht aus Bi- oder Multikomponenten-Fasern oder Filamenten durch Hochdruck-Fluidstrahlbehandlung der Oberfläche zu Mikrofasern oder Mikrofilamenten gesplittet wird.

6. Verfahren nach Anspruch 5, **dadurch gekennzeichnet, daß** die Hochdruck-Fluidstrahlbehandlung der Oberfläche mindestens einmal von einer Seite mit Drücken von 50 bis 500 bar vorgenommen wird.

7. Verfahren nach Anspruch 5 oder 6, **dadurch gekennzeichnet, daß** auf die Unterseite eine Schaumstoff-Schicht aufgebracht wird.

8. Verfahren nach Anspruch 7, **dadurch gekennzeichnet, daß** die Anbringung der Schaumstoff-Schicht mit Hilfe eines Schmelzklebers erfolgt.

9. Verfahren nach einem der Ansprüche 5 bis 8, **dadurch gekennzeichnet, daß** die Oberseite vor der Verbindung mit der Schaumstoff-Schicht bedruckt wird.

10. Verfahren nach Anspruch 9, **dadurch gekennzeichnet, daß** das Bedrucken auf der Gegenseite der letzten Passage der durch die Hochdruck-Fluidstrahlbehandlung verfestigten Oberfläche vorgenommen wird.

11. Verfahren nach Anspruch 10, **dadurch gekennzeichnet, daß** das Bedrucken mit Hilfe von Transfer-, Binder-, Tief- oder Tintenstrahl-Druck vorgenommen wird.

12. Verfahren nach Anspruch 10, **dadurch gekennzeichnet, daß** das Bedrucken mit Hilfe von industriellen oder Heim-Tintenstrahl-Druckern (Inkjet) vorgenommen wird.
